# EUROPÄISCHE PATENTANMELDUNG

(11) **EP 4 322 338 A1**
(43) Veröffentlichungstag der Anmeldung: **14.02.2024**
(21) Anmeldenummer: 23189491.6
(22) Anmeldetag: 03.08.2023
(51) Int. Cl.: H01R 13/405, B29C 45/00, H01R 4/18, H01R 13/688, H01R 24/30, H01R 103/00, B29C 45/14, H01R 13/504, H01R 43/24

(54) **STECKERBRÜCKENROHLING, STECKERBRÜCKE SOWIE VERFAHREN ZUM HERSTELLEN EINER STECKERBRÜCKE**

(30) Priorität: 04.08.2022 DE 102022119663
(71) Anmelder: UNGER Kabel-Konfektionstechnik GmbH, 09465 Sehmatal - Sehma (DE)
(72) Erfinder: Unger, Ronny, 09465 Annaberg-Buchholz OT Frohnau (DE)
(74) Vertreter: Weidner Stern Jeschke

(57) **Zusammenfassung**

Die Erfindung betrifft einen Steckerbrückenrohling zum Herstellen einer Steckerbrücke mit einem Grundgehäuse und einem Kontaktelement, wobei das Kontaktelement drei Anschlusskontakte und drei Litzenaufnahmen aufweist, wobei die drei Anschlusskontakte zum elektrischen Kontaktieren von drei Steckkontakten, einer Sicherungsaufnahme und von drei Litzen einer Anschlussleitung, die drei Steckkontakte zum elektrischen Kontaktieren eines Netzanschlusses und die Sicherungsaufnahme zum Aufnehmen einer elektrischen Sicherung eingerichtet sind und die in der Sicherungsaufnahme aufgenommene elektrische Sicherung ein Begrenzen eines maximalen Stromflusses zumindest eines der Steckkontakte erreicht, wobei zwischen dem Grundgehäuse und dem Kontaktelement eine Positioniereinrichtung angeordnet ist, wobei die Positioniereinrichtung zumindest einen der Anschlusskontakte vom Grundgehäuse derart beabstandet positioniert, dass mittels des damit erreichten Abstandes zwischen dem Grundgehäuse und dem jeweiligen Anschlusskontakt ein Umspritzen des jeweiligen Anschlusskontaktes mittels verflüssigtem thermoplastischem Werkstoff ermöglicht ist. Weiterhin betrifft die Erfindung eine Streckerbrücke sowie ein Verfahren zum Herstellen einer Steckerbrücke.

## Beschreibung

Die Erfindung betrifft einen Steckerbrückenrohling zum Herstellen einer Steckerbrücke mit einem Grundgehäuse und einem Kontaktelement, wobei das Kontaktelement drei Anschlusskontakte und drei Litzenaufnahmen aufweist, wobei die drei Anschlusskontakte zum elektrischen Kontaktieren von drei Steckkontakten, einer Sicherungsaufnahme und von drei Litzen einer Anschlussleitung, die drei Steckkontakte zum elektrischen Kontaktieren eines Netzanschlusses und die Sicherungsaufnahme zum Aufnehmen einer elektrischen Sicherung eingerichtet sind und die in der Sicherungsaufnahme aufgenommene elektrische Sicherung ein Begrenzen eines maximalen Stromflusses zumindest eines der Steckkontakte erreicht, wobei zwischen dem Grundgehäuse und dem Kontaktelement eine Positioniereinrichtung angeordnet ist, wobei die Positioniereinrichtung zumindest einen der Anschlusskontakte vom Grundgehäuse derart beabstandet positioniert, dass mittels des damit erreichten Abstandes zwischen dem Grundgehäuse und dem jeweiligen Anschlusskontakt ein Umspritzen des jeweiligen Anschlusskontaktes mittels verflüssigtem thermoplastischem Werkstoff ermöglicht ist, wobei das Grundgehäuse eine zu einer Aufnahmeeinrichtung korrespondierende Abdeckeinrichtung aufweist, wobei die Abdeckeinrichtung in einem montierten Zustand an der Aufnahmeeinrichtung einen Hohlraum mit dem Grundgehäuse bildet, wobei mittels eines Einspritzens des verflüssigten thermoplastischen Werkstoffs in den Hohlraum ein im Wesentlichen vollständiges Umspritzen des jeweiligen Anschlusskontaktes mittels verflüssigtem thermoplastischen Werkstoff ermöglicht ist. Weiterhin betrifft die Erfindung eine Steckerbrücke mit einem Steckerbrückenrohling dieser Art. Ebenso betrifft die Erfindung ein Verfahren zum Herstellen einer Steckerbrücke.

Bekannte Steckerbrücken der genannten Art, welche insbesondere im Bereich von Großbritannien und des Commonwealth Anwendung finden, weisen neben den üblichen Steckkontakten zum Kontaktieren einer Steckdose eine zusätzliche elektrische Sicherung auf, welche einen Stromfluss innerhalb des als Steckerbrücke bezeichneten Steckers begrenzt. Damit wird insbesondere einer vergleichsweise schwachen elektrischen Ausrüstung von beispielsweise Gebäuden Rechnung getragen. Während des Herstellungsprozesses einer solchen Steckerbrücke ist dabei das Einlegen von Anschlusskontakten sowie das zusätzliche Umspritzen der Steckerbrücke üblich, wobei allerdings Kapillarbereiche unterhalb der Anschlusskontakte verbleiben können. Dies stellt insbesondere im Zusammenhang mit der verwendeten elektrischen Sicherung und einem für die elektrische Sicherung vorgesehenen Aufnahmebereich, nämlich einer Sicherungsaufnahme, ein Problem bezüglich eindringender Feuchtigkeit dar. Dieser Aufnahmebereich ist häufig mit einem Deckel zum Austausch der Sicherung ausgestattet, sodass eine zusätzliche Abdichtung des Deckels erforderlich ist. Es kann dabei durch eindringende Feuchtigkeit insbesondere zu Korrosion von Anschlusskontakten innerhalb der Steckerbrücke kommen, wobei aufgrund der Bauweise der genannten Steckerbrücken insbesondere ein Erdungskontakt anfällig für Korrosion ist. Der Wegfall eines Erdungskontaktes durch beispielsweise Zersetzung aufgrund von Korrosion ist allerdings sicherheitsrelevant und daher nicht tolerierbar.

Die AT 3 925 E offenbart eine elektrische Steckeranordnung. Eine darin offenbarte Steckerbrücke weist einen Grundkörper auf, auf den im hinteren Bereich eine Klammer aufgesteckt werden kann, sofern die entsprechenden Kontakte vercrimpt wurden. Zusätzlich mit einem weiteren Gehäuseteil erfolgt damit ein Einhausen des Kontaktbereiches. Der entsprechende Bereich kann dann ausgegossen werden.

Die DE 10 2009 040 776 A1 beschreibt eine Steckerbrücke sowie ein Verfahren zu deren Herstellung. Ein Halteelement ist mit entsprechenden Kontakten versehen und dient dem Schaffen eines Freiraums hinter den Kontakten sowie dem Halten einer Sicherung.

Die GB 2 152 301 A offenbart eine Steckerbrücke für den britischen Markt. Kontakte sind hier zu einer Grundplatte beabstandet angeordnet, sodass ein Umspritzen der Kontakte ermöglicht sein kann.

Die DE 100 62 738 A1 betrifft eine Steckerbrücke, wobei eine Abdeckkappe mit einem daran angeordneten beweglichen Element vorgesehen ist. Das bewegliche Element ist mittels dünner Laschen beweglich an der Abdeckkappe aufgenommen und kann nach dem Montieren der Kontakte und vor einem Umspritzen mit Kunststoff heruntergeklappt werden.

Aufgabe der Erfindung ist es, den Stand der Technik zu verbessern.

Gelöst wird die Aufgabe durch einen Steckerbrückenrohling zum Herstellen einer Steckerbrücke mit einem Grundgehäuse und einem Kontaktelement, wobei das Kontaktelement drei Anschlusskontakte und drei Litzenaufnahmen aufweist, wobei die drei Anschlusskontakte zum elektrischen Kontaktieren von drei Steckkontakten, einer Sicherungsaufnahme und von drei Litzen einer Anschlussleitung, die drei Steckkontakte zum elektrischen Kontaktieren eines Netzanschlusses und die Sicherungsaufnahme zum Aufnehmen einer elektrischen Sicherung eingerichtet sind und die in der Sicherungsaufnahme aufgenommene elektrische Sicherung ein Begrenzen eines maximalen Stromflusses zumindest eines der Steckkontakte erreicht, wobei zwischen dem Grundgehäuse und dem Kontaktelement eine Positioniereinrichtung angeordnet ist, wobei die Positioniereinrichtung zumindest einen der Anschlusskontakte vom Grundgehäuse derart beabstandet positioniert, dass mittels des damit erreichten Abstandes zwischen dem Grundgehäuse und dem jeweiligen Anschlusskontakt ein Umspritzen des jeweiligen Anschlusskontaktes mittels verflüssigtem thermoplastischem Werkstoff ermöglicht ist, wobei das Grundgehäuse eine zu einer Aufnahmeeinrichtung korrespondierende Abdeckeinrichtung aufweist, wobei die Abdeckeinrichtung in einem montierten Zustand an der Aufnahmeeinrichtung einen Hohlraum mit dem Grundgehäuse bildet, wobei mittels eines Einspritzens des verflüssigten thermoplastischen Werkstoffs in den Hohlraum ein im Wesentlichen vollständiges Umspritzen des jeweiligen Anschlusskontaktes mittels verflüssigtem thermoplastischen Werkstoff ermöglicht ist, und wobei die Abdeckeinrichtung einen Durchbruch oder mehrere Durchbrüche zum Einspritzen des verflüssigten thermoplastischen Werkstoffs und/oder Entlüften des Hohlraumes und insbesondere zumindest einen an einem jeweiligen Durchbruch angeordneten Steg oder mehrere den jeweiligen Durchbrüchen zugeordneten Stege zum Lenken des verflüssigten thermoplastischen Werkstoffs aufweist.

Kerngedanke der Erfindung ist es dabei, eine Positionierungseinrichtung, also beispielsweise einen Abstandshalter, einen hervorstehenden Nocken am Grundgehäuse oder auch eine auf Grund einer Bauart des jeweiligen Kontaktelementes ausgebildete Anordnung des Kontaktelementes mit insbesondere den Anschlusskontakten, derart vorzusehen, dass ein Freiraum, nämlich ein Abstand zwischen zumindest einem Anschlusskontakt und dem Grundgehäuse verbleibt, sodass beim nachfolgenden Umspritzen des Anschlusskontaktes oder des jeweiligen Anschlusskontaktes mittels verflüssigtem thermoplastischen Werkstoff ein vollständiges Umspritzen des Anschlusskontaktes sichergestellt ist. Dies wird insbesondere damit erreicht, dass der Abstand zwischen dem Anschlusskontakt und dem Grundgehäuse so groß ist, dass es insbesondere aufgrund der Oberflächenspannung bzw. Viskosität des verflüssigten thermoplastischen Werkstoffs keine Stauwirkung entsteht, sondern der verflüssigte thermoplastische Werkstoff aufgrund seiner durch Verflüssigen herabgesetzten Viskosität sicher zwischen den Anschlusskontakt und das Grundgehäuse fließen kann. Bei einem anschließenden Erstarren des thermoplastischen Werkstoffs ist dann der Anschlusskontakt vollständig umgeben und es können keine Kapillarbereiche mehr zugänglich verbleiben, in die beispielsweise durch die Sicherungsaufnahme Feuchtigkeit eindringen kann. Dabei dient die Abdeckeinrichtung und der mit dem Grundgehäuse gebildete Hohlraum dazu, eingespritzten verflüssigten thermoplastischen Werkstoff mittels entsprechender Durchbrüche zu lenken und damit ein sicheres Umspritzen der jeweiligen Anschlusskontakte oder eines jeweiligen Anschlusskontaktes zu ermöglichen.

Folgende Begriffe seien in diesem Zusammenhang erläutert:

Ein "Steckerbrückenrohling" ist ein Rohteil, insbesondere ein Kunststoff-Formteil, welches als Grundlage zum Bilden einer Steckerbrücke, beispielsweise für ein Elektrogerät, dient. Der Steckerbrückenrohling wird dabei beim Herstellen einer Steckerbrücke mit weiteren Bauteilen ausgestattet und in einem späteren Fertigungsschritt beispielsweise mit einem thermoplastischen Werkstoff umspritzt. Eine solche "Steckerbrücke" ist dabei beispielsweise ein auch als "Stecker" bekanntes Anschlusselement mit Steckkontakten, wobei die Steckerbrücke beispielsweise in eine Steckdose zum Versorgen eines Elektrogerätes mit elektrischem Strom eingesteckt werden kann. Dabei weist die Steckerbrücke ein "Grundgehäuse", also einen mechanischen Kernbereich, und ein "Kontaktelement", also eine elektrische Kontaktierungsmöglichkeit, auf. Das Kontaktelement weist dabei beispielsweise elektrisch leitfähige, metallische Bauteile auf, welche dem Aufnehmen und Leiten von elektrischem Strom dienen. Dabei weist das Kontaktelement insbesondere drei "Anschlusskontakte" auf, im Steckerbrückenrohling elektrische Leiterbahnen oder elektrische Leitbereiche, wohingegen die jeweiligen "Steckkontakte" ein elektrisches Kontaktieren beispielsweise mit Kontaktaufnahmen einer Steckdose ermöglichen. Weiterhin dient eine "Sicherungsaufnahme" dem Aufnehmen einer elektrischen Sicherung, insbesondere einer Schmelzsicherung. Solche Steckerbrücken mit insbesondere drei Steckkontakten und einer in der Steckerbrücke vorgesehenen Sicherungsaufnahme für eine elektrische Schmelzsicherung sind dabei insbesondere im Bereich des Commonwealth verbreitet. Entsprechend an den Anschlusskontakten vorgesehen "Litzenaufnahmen" dienen jeweils dem Aufnehmen von drei stromführenden "Litzen" einer Anschlussleitung, wobei die "Anschlussleitung" dabei beispielsweise im üblichen Sprachgebrauch das "Kabel" des Elektrogerätes darstellt. Es sei hierzu angemerkt, dass die drei Litzen dabei stromführend sein können, jedoch üblicherweise jeweils zum Bilden einer elektrischen Phase, eines Nullleiters und einer Erdungsleitung dienen.

Der "Netzanschluss" ist hierbei beispielsweise als Steckdose in einer Wand ausgebildet, kann jedoch als Steckerleiste und/oder als Steckbuchse eines Verlängerungskabels ausgebildet sein. Der Netzanschluss dient dabei dem Bereitstellen der zu den drei Litzen und den drei Steckkontakten korrespondierenden elektrischen Versorgung und/oder Erdung.

Es sei hierzu erwähnt, dass die "elektrische Sicherung", welche insbesondere als Schmelzsicherung und/oder als thermische Sicherung eingerichtet ist, einen maximalen Stromfluss zumindest eines der Steckkontakte begrenzt, um beispielsweise eine Überlastung der Steckerbrücke zu verhindern. Dabei kann die elektrische Sicherung sowohl irreversibel, also beispielsweise als Schmelzdrahtsicherung, als auch reversibel, beispielsweise als thermisch schaltende Sicherung, ausgeführt sein.

Eine "Positioniereinrichtung" ist eine insbesondere mechanische Einrichtung, welche es ermöglicht, zumindest einen der Anschlusskontakte vom Grundgehäuse beabstandet zu positionieren. Dabei kann die Positioniereinrichtung als zusätzliches Element, beispielsweise am Grundgehäuse, ausgeführt sein, sodass zumindest einer der Anschlusskontakte von der Positioniereinrichtung getragen oder mechanisch kontaktierend positioniert wird und/oder die Positioniereinrichtung kann beispielsweise auch in einem der Anschlusskontakte, beispielsweise durch eine jeweilige Ausführung einer Biegegeometrie des jeweiligen Anschlusskontaktes, ausgebildet sein. In der Folge wird ein Abstand zwischen dem Grundgehäuse und dem jeweiligen Anschlusskontakt erreicht, wobei ein Umspritzen des jeweiligen Anschlusskontaktes mittels des verflüssigten thermoplastischen Werkstoffs in den Abstand hinein und damit um den Anschlusskontakt herum ermöglicht ist.

Eine "Abdeckeinrichtung" dient dabei insbesondere gegenüberliegend zur Positioniereinrichtung dem Einhausen des jeweiligen Anschlusskontaktes, mehrerer Anschlusskontakte oder aller Anschlusskontakte derart, dass die Abdeckeinrichtung in einem montierten Zustand, also angeordnet gegenüber dem Grundgehäuse, einen "Hohlraum", also eine Kavität, mit dem Grundgehäuse bildet. In den Hohlraum hinein ist dann ein Einspritzen des verflüssigten thermoplastischen Werkstoffs, also beispielsweise erhitzt im Kunststoff, ermöglicht. Die Abdeckeinrichtung weist dabei einen "Durchbruch" oder mehrere Durchbrüche auf, also entlang einer Einspritzachse angeordnete Öffnungen, durch die verflüssigter thermoplastischer Werkstoff entlang genannter Einspritzachse eindringen und/oder Luft aus dem Hohlraum herausgeführt werden kann, sodass ein "Entlüften", also ein Verdrängen von Luft zum Bereitstellen eines freien Volumens für den verflüssigten thermoplastischen Werkstoff, ermöglicht ist. Ein jeweiliger Durchbruch weist dabei einen "Steg" oder mehrere Stege auf, also Materialbrücken oder Werkstoffbrücken, welche zum Lenken des verflüssigten thermoplastischen Werkstoffs eingerichtet sind.

Insbesondere kann dabei eine Anordnung aus Durchbrüchen und Stegen derart gewählt werden, dass beispielsweise Fließwege für den verflüssigten thermoplastischen Werkstoff vorgegeben sind und/oder beispielsweise entlang einer Gravitationsrichtung ein Entlüften des Hohlraumes ermöglicht ist.

Insbesondere liegen der Durchbruch und/oder die Durchbrüche dabei entlang der Einspritzachse oberhalb der jeweiligen Anschlusskontakte und/oder seitlich in Bezug zur jeweiligen Einspritzachse versetzt angeordnet zu den jeweiligen Anschlusskontakten, sodass beispielsweise durch einen Durchbruch verflüssigter thermoplastischer Werkstoff eindringen kann, unterhalb des jeweiligen Anschlusskontaktes hindurchströmen kann und sodann an einer gegenüberliegenden Seite in Richtung eines zum Entlüften vorgesehenen Durchbruches wieder austreten kann.

Insbesondere kann die Abdeckeinrichtung lösbar in die Aufnahmeeinrichtung einbringbar und/oder insbesondere formschlüssig gesichert in die Aufnahmeeinrichtung einbringbar sein. Dabei kann beispielsweise ein formschlüssiges Sichern mittels eines Einrastens, eines Einklippsens oder eines Einklemmens oder auch eines kraftschlüssiges Sicherns mittels eines Einpressens erfolgen. Somit ist die Vormontage sicher durchführbar.

"Lösbar" bezeichnet in diesem Zusammenhang insbesondere ein reversibles Befestigen, wobei beispielsweise die Abdeckeinrichtung auch gemäß einer Sollbruchstelle ausgeführte Widerhaken aufweisen kann, sodass beispielsweise nach dem Lösen der Steckerbrückenrohling unbeschädigt verbleibt, jedoch eine neue, unbeschädigte Abdeckeinrichtung verwendet werden muss.

In einer Ausführungsform ist an der Abdeckungseinrichtung eine insbesondere beweglich angeschlossene Stützeinrichtung angeordnet, wobei mittels der Stützeinrichtung im montierten Zustand der Abdeckeinrichtung ein mechanisches Stützen und/oder ein elektrisches Isolieren eines jeweiligen Anschlusskontaktes und/oder des jeweiligen Litzenanschlusses ermöglicht ist.

Beispielsweise kann die Stützeinrichtung auch zwischen entsprechenden Bestandteilen der Anschlussteile bewegt, insbesondere geschwenkt, werden. Zusätzlich zur Stützeinrichtung und unabhängig von der Ausführung der Anschlusskontakte, des Umspritzens und der Abdeckkappe kann im Grundgehäuse auch eine jeweilige Nase oder eine andere Halteeinrichtung vorgesehen sein, die ein seitliches Ausweichen der Stützeinrichtung beim Spritzguss verhindert.

Eine "Stützeinrichtung" dient dabei insbesondere dem Stützen und/oder Abstützen der Anschlusskontakte, der Litzen und/oder anderer Bestandteile und kann beispielsweise auch dazu eingerichtet sein, eine gegenüber dem Grundgehäuse angeordnete und/oder positionierte Abdeckkappe aufzunehmen.

Um die Montage zu vereinfachen und standardisiert durchführen zu können, weist ein jeweiliger Anschlusskontakt einen Crimpanschluss zum formschlüssigen Anschließen an eine jeweilige Litze auf, wobei insbesondere an einem Crimpanschluss oder an mehreren Crimpanschlüssen eine jeweilige Litze mittels Crimpens angeschlossen ist.

Ein "Crimpanschluss" ist dabei ein insbesondere entlang der Längsachse eines jeweiligen Anschlusskontaktes einrollbar ausgeführter flacher Bereich, in den ein abisolierter Bereich einer Litze eingelegt und mittels sogenannten Crimpens, also mittels Einrollens und Verpressens, befestigt werden kann. Sofern beispielsweise eine jeweilige schon mittels Crimpens angeschlossen ist, kann ein entsprechender Steckerbrückenrohling derart vorbereitet direkt dem Spritzguss zugeführt werden, sodass die Herstellung insgesamt vereinfacht wird.

Insbesondere ist ein jeweiliger Anschlusskontakt mit einem jeweiligen Steckkontakt zum elektrischen Kontaktieren des Netzanschlusses verbunden oder der jeweilige Anschlusskontakt weist einen jeweiligen Steckkontakt zum elektrischen Kontaktieren des Netzanschlusses auf. Somit können beispielsweise Anschlusskontakt und Steckkontakt als integrales Bauteil vorbereitet und in den Steckerbrückenrohling eingebracht, insbesondere eingepresst, werden, sodass die Montage zusätzlich vereinfacht wird.

In einem weiteren Aspekt wird die Aufgabe gelöst durch eine Steckerbrücke mit einem Steckerbrückenrohling gemäß einer der vorherig bezeichneten Ausführungsformen, wobei der Steckerbrückenrohling mit einem erstarrten thermoplastischen Werkstoff umspritzt ist, wobei aus dem Steckerbrückenrohling und dem erstarrten thermoplastischen Werkstoff ein Gehäuse gebildet und einer der Anschlusskontakte im Wesentlichen vollständig von thermoplastischem Werkstoff umgeben ist. Ebenso können jedoch auch mehrere der jeweiligen Anschlusskontakte oder alle jeweiligen Anschlusskontakte im Wesentlichen von thermoplastischem Werkstoff umgeben sein.

Bei einer derartigen Steckerbrücke ist insbesondere durch das vollständige Umspritzen des Anschlusskontaktes oder der Anschlusskontakte sichergestellt, dass beispielsweise Korrosion durch eindringende Feuchtigkeit wirksam verhindert wird. Insbesondere kann dies am Erdungsanschluss, jedoch auch an allen anderen Anschlüssen, wirksam durchgeführt werden.

Es sei hierzu noch darauf hingewiesen, dass der "erstarrte thermoplastische Werkstoff" durch beispielsweise aktives Abkühlen oder passives abkühlen lassen erzeugt wird, indem der Werkstoff unterhalb seiner Erweichungstemperatur oder unterhalb seiner Schmelztemperatur gebracht wird, wohingegen der "verflüssigte thermoplastische Werkstoff" beispielsweise durch thermisches Aufschmelzen und/oder Erhitzen derart erweicht oder verflüssigt wird, dass dieser fließfähig und/oder formbar wird. Dazu sind eine Anzahl von thermoplastischen Werkstoffen, beispielsweise Spritzgussmassen wie Polyamid oder Polyethylen, bekannt.

In einem weiteren Aspekt wird die Aufgabe gelöst durch ein Verfahren zum Herstellen einer Steckerbrücke gemäß einer der vorigen Ausführungsform mittels eines Steckerbrückenrohlings gemäß einer der vorig beschriebenen Ausführungsformen, mit folgenden Schritten:
- Bereitstellen des Steckerbrückenrohlings, sodass der Steckerbrückenrohling bereitgestellt ist,
- Umspritzen des Grundgehäuses des Steckerbrückenrohlings mit einem verflüssigten thermoplastischen Werkstoff, sodass das Gehäuse gebildet und der jeweilige Anschlusskontakt mit dem verflüssigten thermoplastischen Werkstoff im Wesentlichen vollständig umspritzt ist oder sind,
- Erkalten des verflüssigten thermoplastischen Werkstoffs, sodass der verflüssigte thermoplastische Werkstoff erstarrt,
sodass die Steckerbrücke mit zumindest einem im Wesentlichen vollständig umspritzten Anschlusskontakt hergestellt ist.

Dabei wird der Steckerbrückenrohling gemäß einer der vorig bezeichneten Ausführungsformen bereitgestellt und sodann an seinem Gehäuse mit verflüssigtem thermoplastischen Werkstoff umspritzt. Dabei kann das Grundgehäuse vollständig oder auch nur teilweise, insbesondere an einer die Anschlusskontakte aufweisenden Seite, umspritzt werden. Durch die Ausgestaltung des Steckerbrückenrohlings wird dann der jeweilige Anschlusskontakt mit dem verflüssigten thermoplastischen Werkstoff im Wesentlichen vollständig umspritzt, wobei die Abdeckeinrichtung dem Lenken des verflüssigten thermoplastischen Werkstoffes dient. Nach dem nachfolgenden Erkalten des verflüssigten thermoplastischen Werkstoffs liegt der thermoplastische Werkstoff dann erstarrt vor und die Steckerbrücke ist erfindungsgemäß mit zumindest einem im Wesentlichen vollständig umspritzten Anschlusskontakt oder mehreren im Wesentlichen vollständig umspritzten Anschlusskontakten zuverlässig und korrosionsgeschützt hergestellt.

Im Weiteren wird die Erfindung anhand von Ausführungsbeispielen näher erläutert. Es zeigen
- Figur 1a: eine schematische Darstellung eines Steckerbrückenrohlings in einer isometrischen Ansicht,
- Figur 1b: den Steckerbrückenrohling der Figur 1a in einer Draufsicht von einer Steckseite,
- Figur 1c: den Steckerbrückenrohling der Figur 1a in einer Draufsicht von einer Rückseite,
- Figur 2: eine Kappe zum Aufbringen in eine Klemmung des Steckerbrückenrohlings,
- Figur 3: einen Montagezustand des Steckerbrückenrohlings der Figur 1 mit der Kappe der Figur 2, sowie
- Figur 4: eine Schnittdarstellung des Montagezustands der Figur 3.

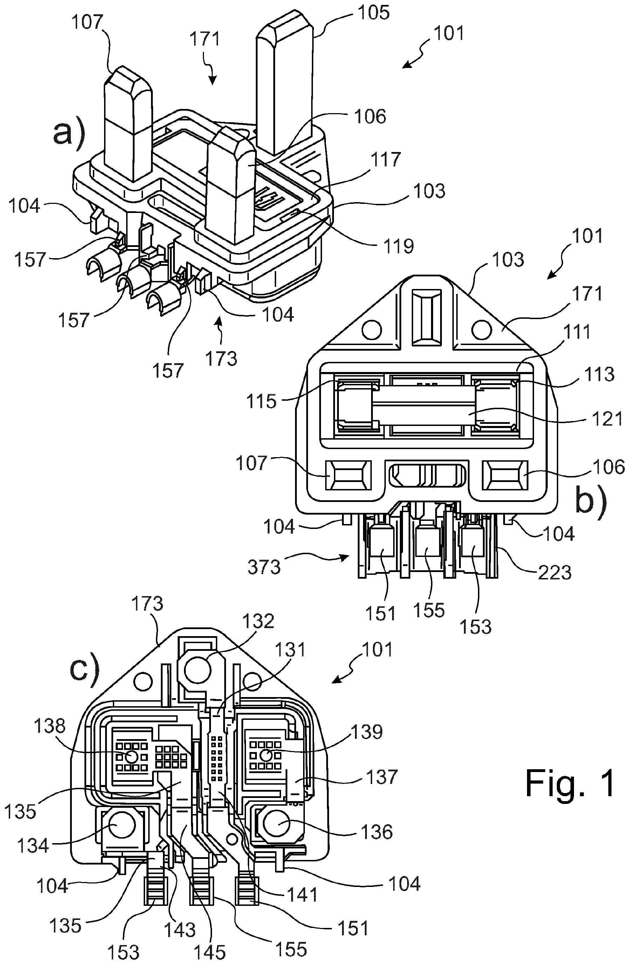

Ein Steckerrohling 101 weist ein Grundgehäuse 103 auf. Im Grundgehäuse 103 sind zum Anschluss an eine Steckdose (nicht gezeigt) ein Erdungsstift 105, ein Nulleiterstift 106 sowie ein Phasenstift 107 angeordnet und fest auf einer Steckerseite 171 im Grundgehäuse 103 eingepresst. Damit kann ein späterer aus dem Steckerrohling 101 hergestellter Stecker mit der Steckseite 171 in eine entsprechende Steckdose eingeführt und ein elektrisches Gerät damit elektrisch kontaktiert werden. Ebenfalls auf der Steckseite 171 angeordnet ist ein Deckel 117, welcher Ausnehmungen 119 aufweist, mittels derer der Deckel 117 vom Grundgehäuse 103 entfernt werden kann. Der Deckel 117 dient als Abdeckung für einen Sicherungshalter 111 und verdeck im montierten Zustand (vgl. auch Figur 1a) den Sicherungshalter 111, in dem in einen Halteclip 113 und eine Halteclip 115 eine Schmelzsicherung 121 eingesetzt ist. Die Schmelzsicherung 121 ist in der elektrischen Versorgung des Phasenstifts 107 geschaltet und begrenzt damit einen möglichen Stromfluss in Richtung des Phasenstifts 107, indem die Schmelzsicherung bei einer elektrischen Überlastung schmilzt und den Stromfluss unterbricht.

Ausgehend vom Erdungsstift 105 sowie elektrisch mit diesem kontaktiert ist ein Verbindungskontakt 131 durch das Grundgehäuse 103 am Grundgehäuse 103 entlanggeführt. Eine Pressverbindung 132 stellt die elektrische und auch mechanische Verbindung zum Erdungsstift 105 sicher. Analog dazu sind für den Nulleiterstift 106 sowie den Phasenstift 107 ein Verbindungskontakt 133 mit einer Pressverbindung 134 sowie ein Verbindungskontakt 135 mit einer Pressverbindung 136 verbunden. Der Verbindungskontakt 135 führt dabei zu einer Pressverbindung 138 am Halteclip 113, sodass der Phasenanschluss elektrisch über die Schmelzsicherung 121 geführt ist. Von einer Pressverbindung 139 am Halteclip 115 führt dann ein weiterer Verbindungskontakt 137 zur Pressverbindung 136 am Phasenstift 107. Dabei weisen der Verbindungskontakt 131, 133 und 135 jeweilige Stege 141, 143 und 145 auf, welche frei innerhalb des Grundgehäuses 103 geführt sind und in direkter Nähe zu entsprechenden Durchbrüchen in Richtung der Schmelzsicherung 121. Die jeweilige Pressverbindung 132, 134 und 136 sind dabei Teil eines Abstandshalters, mittels welchem die Verbindungskontakte 131, 133 und 135 in einem Abstand vom Grundgehäuse 103 gehalten werden, wobei eine entsprechende Biegeform der jeweiligen Verbindungskontakte 131, 133 und 135 den weiteren Teil des Abstandshalters integral bilden.

Außerhalb des Grundgehäuses 103 sind weiterhin Crimpanschlüsse 151, 153 und 155 vorgesehen, sodass die entsprechenden Verbindungskontakte 131, 133 und 135 mittels beispielsweise einer jeweiligen gecrimpten Litze kontaktiert werden können. Die Litze (nicht gezeigt) ist dann Teil beispielsweise einer Netzleitung, welche ein elektrisches Gerät kontaktiert. Zwischen den Crimpanschlüssen 151, 153 und 155 sind am Grundgehäuse 103 jeweilige Auflager 157 angeordnet, wobei die Auflager 157 den jeweiligen Crimpanschluss 151, 153 und 155 gegen mechanische Einflüsse, insbesondere beim Crimpen und insbesondere gegen ein Biegen und/oder Knicken der Crimpanschlüsse 151, 153 und 155, stützen und damit sichern.

Auf einer Rückseite 173, welche der Steckseite 171 gegenüberliegt, ist eine Kappe 201 in eine Klemmung 305 in einem Montagezustand 301 eingefügt. Dazu ist die Kappe 201 in einer Montageposition 303 angeordnet.

Die Kappe 201 weist eine ebene Deckelfläche 203 sowie einen orthogonal dazu angeordneten Rahmen 205 auf. In der Deckelfläche 203 sind mehrere Durchbrüche 207 vorgesehen, ebenso sind im Rahmen 205 Durchbrüche 208 und Stege 209 vorgesehen. Damit kann die Kappe 201, insbesondere wenn diese in der Montageposition 303 am Grundgehäuse 103 angeordnet ist, von verflüssigtem thermoplastischem Kunststoff durchflossen werden, wie dieser beispielsweise zum Fertigstellen des Steckerrohlings 101 zu einem fertigen Stecker in einem Spritzgussverfahren verwendet wird. Die entsprechenden Durchbrüche 207 und 208 sind dabei derart angeordnet, dass der verflüssigte thermoplastische Kunststoff die Verbindungskontakte 131, 133 und 135 umfließen kann, wobei gleichzeitig Luft abgeführt werden kann.

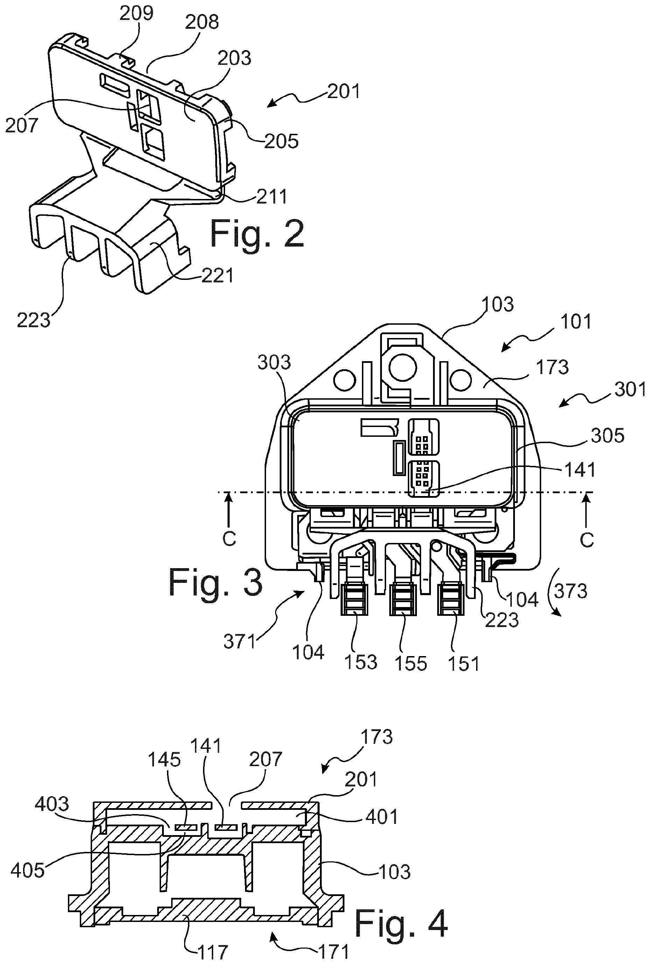

An der Kappe 201 ist weiterhin an einem Feststoffgelenk 211 eine Stützklammer 221 mit Stegen 223 angeordnet. Diese ist in der Montageposition 303 in der Nähe der Crimpkontakte 151, 153 und 155 angeordnet (in Figur 3 noch in einer Ausgangsstellung 371 dargestellt) und schützt in einer Eingriffsstellung 373 (vgl. hierzu Figur 2b) die Crimpkontakte 151, 153 und 155 vor ungewünschtem elektrischem Kontakt, insbesondere während eines Spritzprozesses.

Durch die Kappe 201 wird in der Montageposition 303 ein Hohlraum 401 gegenüber dem Grundgehäuse 103 gebildet (vergleiche hierzu Figur 4). Weiterhin sind die Stege 141 (Erdungsanschluss) sowie 145 (Phasenanschluss) im Grundgehäuse 103 so positioniert, dass ein weiterer Freiraum 403 seitlich sowie ein Freiraum 405 unterhalb der Stege in Richtung des Grundgehäuses 103 verbleiben. Hierbei erfolgt die Positionierung der Stege 141 und 145 mittels deren geometrischer Anordnung in Bezug zu den Pressverbindungen 132 sowie 138 sowie einer Auflage der Stege 141 sowie 145 im Bereich der Crimpanschlüsse 151 und 155, sodass die Stege 141 und 145 frei innerhalb des Grundgehäuses 103 schwebend aufgenommen sind. Ebenso könnten hier punktuell angeordnete Abstandshalter oder Pins im Grundgehäuse 103 vorgesehen sein, welche eine Positionierung der Stege 141 und 145 vornehmen.

Wird nun der Steckerrohling 101 mit montierten Komponenten und insbesondere der montierten Kappe 201 in einem Spritzgusswerkzeug mit thermoplastischem Kunststoff umspritzt, um einen fertigen Stecker zu erzeugen, so kann der verflüssigte thermoplastische Kunststoff durch die Durchbrüche 207 sowie 208 in den Hohlraum 401 sowie zusätzlich in die Freiräume 403 und 405 einfließen und damit die Stege 141 und 145 vollständig umgeben. Nach dem Erstarren des verflüssigten thermoplastischen Kunststoffs liegt damit ein Stecker vor, in dem die Anschlusskontakte, nämlich die Verbindungskontakte 131 sowie 135 für den Erdungsanschluss und den Phasenanschluss vollständig von thermoplastischem Kunststoff umgeben sind, insbesondere in einem Bereich, in dem durch beispielsweise eine Undichtigkeit am Deckel 117 für die Schmelzsicherung 121 Feuchtigkeit eindringen kann.

Es sei in diesem Zusammenhang auch auf Nasen 104 hingewiesen, die am Grundgehäuse 103 so angeordnet sind, dass diese mit den Äußeren Stegen 223 der Stützklammer 221 in der Eingriffsstellung 373 der Stützklammer 221 seitlich in Eingriff stehen, sodass die Stege 223 der Stützklammer 221 beim Durchführen des Spritzgusses nicht nach Außen gedrückt werden. Diese Nasen 104 sind dabei auch unabhängig von der Ausführung der Kappe 201 und deren Funktion realisierbar.

### Bezugszeichenliste

- 101: Steckerrohling
- 103: Grundgehäuse
- 104: Nase
- 105: Erdungsstift
- 106: Nullleiterstift
- 107: Phasenstift
- 111: Sicherungshalter
- 113: Halteclip
- 115: Halteclip
- 117: Deckel
- 119: Ausnehmung
- 121: Schmelzsicherung
- 131: Verbindungskontakt
- 132: Pressverbindung
- 133: Verbindungskontakt
- 134: Pressverbindung
- 135: Verbindungskontakt
- 136: Pressverbindung
- 137: Verbindungskontakt
- 138: Pressverbindung
- 139: Pressverbindung
- 141: Steg
- 143: Steg
- 145: Steg
- 151: Crimpanschluss
- 153: Crimpanschluss
- 155: Crimpanschluss
- 157: Auflager
- 171: Steckseite
- 173: Rückseite
- 201: Kappe
- 203: Deckelfläche
- 205: Rahmen
- 207: Durchbruch
- 208: Durchbruch
- 209: Steg
- 211: Gelenk
- 221: Stützklammer
- 223: Steg
- 301: Montagezustand
- 303: Montageposition
- 305: Klemmung
- 371: Ausgangsstellung
- 373: Eingriffsstellung
- 401: Hohlraum
- 403: Freiraum
- 405: Freiraum

## Patentansprüche

1. Steckbrückenrohling (101) zum Herstellen einer Steckerbrücke mit einem Grundgehäuse (103) und einem Kontaktelement, wobei das Kontaktelement drei Anschlusskontakte (141, 143, 145) und drei Litzenaufnahmen (151, 153, 155) aufweist, wobei die drei Anschlusskontakte (141, 143, 145) zum elektrischen Kontaktieren von drei Steckkontakten (105, 107, 109), einer Sicherungsaufnahme (111) und von drei Litzen einer Anschlussleitung, die drei Streckkontakte (105, 107, 106) zum elektrischen Kontaktieren eines Netzanschlusses und die Sicherungsaufnahme (111) zum Aufnehmen einer elektrischen Sicherung (121) eingerichtet sind und die in der Sicherungsaufnahme (111) aufgenommene elektrische Sicherung (121) ein Begrenzen eines maximalen Stromflusses zumindest eines der Steckkontakte (105, 107, 106) erreicht, wobei zwischen dem Grundgehäuse (103) und dem Kontaktelement eine Positioniereinrichtung angeordnet ist, wobei die Positioniereinrichtung zumindest einen der Anschlusskontakte (141, 143, 145) vom Grundgehäuse (103) derart beabstandet positioniert, dass mittels des damit erreichten Abstandes (403, 405) zwischen dem Grundgehäuse (103) und dem jeweiligen Anschlusskontakt (141, 143, 145) ein Umspritzen des jeweiligen Anschlusskontaktes (141, 143, 145) mittels verflüssigtem thermoplastischem Werkstoff ermöglicht ist, wobei das Grundgehäuse (103) eine zu einer Aufnahmeeinrichtung (305) korrespondierende Abdeckeinrichtung (201) aufweist, wobei die Abdeckeinrichtung (201) in einem montierten Zustand (301) an der Aufnahmeeinrichtung (305) einen Hohlraum (401) mit dem Grundgehäuse (103) bildet, wobei mittels eines Einspritzens des verflüssigten thermoplastischen Werkstoffs in den Hohlraum (401) ein im Wesentlichen vollständiges Umspritzen des jeweiligen Anschlusskontaktes (141, 143, 145) mittels verflüssigtem thermoplastischem Werkstoff ermöglicht ist, **dadurch gekennzeichnet, dass** die Abdeckeinrichtung (201) einen Durchbruch (207, 208) oder mehrere Durchbrüche (207, 208) zum Einspritzen des verflüssigten thermoplastischen Werkstoffs und/oder Entlüften des Hohlraumes (401) und insbesondere zumindest einen an einem jeweiligen Durchbruch (207, 208) angeordneten Steg (209) oder mehrere den jeweiligen Durchbrüchen (207, 208) zugeordnete Stege (209) zum Lenken des verflüssigten thermoplastischen Werkstoffs aufweist.

2. Steckerbrückenrohling gemäß Anspruch 1, **dadurch gekennzeichnet, dass** die Abdeckeinrichtung (201) lösbar in die Aufnahmeeinrichtung (305) einbringbar und/oder insbesondere formschlüssig gesichert in die Aufnahmeeinrichtung (305) einbringbar ist.

3. Steckerbrückenrohling gemäß einem der Ansprüche 1 oder 2, **dadurch gekennzeichnet, dass** an der Abdeckeinrichtung (201) eine insbesondere beweglich angeschlossene Stützeinrichtung (221) angeordnet ist, wobei mittels der Stützeinrichtung (221) im montierten Zustand (301, 373) der Abdeckeinrichtung (201) ein mechanisches Stützen und/oder ein elektrisches Isolieren eines jeweiligen Anschlusskontaktes (141, 143, 145) und/oder des jeweiligen Litzenanschlusses (151, 153, 155) ermöglicht ist.

4. Steckerbrückenrohling gemäß einem der vorherigen Ansprüche, **dadurch gekennzeichnet, dass** ein jeweiliger Anschlusskontakt (141, 143, 145) einen Crimpanschluss (151, 153, 155) zum formschlüssigen Anschließen einer jeweiligen Litze aufweist, wobei insbesondere an einem Crimpanschluss (151, 153, 155) oder an mehreren Crimpanschlüssen (151, 153, 155) eine jeweilige Litze mittels Crimpens angeschlossen ist.

5. Steckerbrückenrohling gemäß einem der vorherigen Ansprüche, **dadurch gekennzeichnet, dass** ein jeweiliger Anschlusskontakt (141, 143, 145) einen jeweiligen Steckkontakt (105, 107, 109) zum elektrischen Kontaktieren des Netzanschlusses aufweist.

6. Steckerbrücke mit einem Steckerbrückenrohling (101) gemäß einem der vorherigen Ansprüche, **dadurch gekennzeichnet, dass** der Steckerbrückenrohling (101) mit einem erstarrten thermoplastischem Werkstoff umspritzt ist, wobei aus dem Steckerbrückenrohling (101) und dem erstarrten thermoplastischen Werkstoff ein Gehäuse gebildet und einer der Anschlusskontakte (141, 143, 145) im Wesentlichen vollständig von thermoplastischem Werkstoff umgeben ist.

7. Steckerbrücke gemäß Anspruch 6, **dadurch gekennzeichnet, dass** mehrere der jeweiligen Anschlusskontakte (141, 143, 145) oder alle jeweiligen Anschlusskontakte (141, 143, 145) im Wesentlichen von thermoplastischem Werkstoff umgeben sind.

8. Verfahren zum Herstellen einer Steckerbrücke gemäß Anspruch 6 oder 7 mittels eines Steckerbrückenrohlings (101) gemäß einem der Ansprüche 1 bis 5, mit folgenden Schritten:
- Bereitstellen des Steckerbrückenrohlings (101), sodass der Steckerbrückenrohling (101) bereitgestellt ist,
- Umspritzen des Grundgehäuses (103) des Steckerbrückenrohlings (101) mit einem verflüssigten thermoplastischen Werkstoff, sodass das Gehäuse gebildet und der jeweilige Anschlusskontakt (141, 143, 145) mit dem verflüssigten thermoplastischen Werkstoff im Wesentlichen vollständig umspritzt ist oder sind,
- Erkalten des verflüssigten thermoplastischen Werkstoffs, sodass der verflüssigte thermoplastische Werkstoff erstarrt,
sodass die Steckerbrücke mit zumindest einem im Wesentlichen vollständig umspritzten Anschlusskontakt (141, 143, 145) hergestellt ist.
